# EUROPEAN PATENT APPLICATION

(11) **EP 4 635 753 A1**
(43) Date of publication of application: **22.10.2025**
(21) Application number: 23903028.1
(22) Date of filing: 24.08.2023
(51) Int. Cl.: B60C 11/00, B60C 11/03

(54) **TIRE**

(30) Priority: 16.12.2022 JP 2022201606
(71) Applicant: BRIDGESTONE CORPORATION, Chuo-ku Tokyo 104-8340 (JP)
(72) Inventor: NAKATA Yoshiki, Tokyo 104-8340 (JP)
(74) Representative: Marks & Clerk LLP
(86) International application number: PCT/JP2023/030591
(87) International publication number: WO 2024/127724

(57) **Abstract**

A tire T01, wherein a tread surface 8 is provided with: a plurality of main grooves 3 each extending in a tire circumferential direction; a pair of shoulder land portions 5, which are defined between a pair of main grooves that are located on the outermost side in a tire width direction among the plurality of main grooves 3 and a pair of ground contact edges; and one or more center land portions 6, which are defined between the plurality of main grooves, wherein in a footprint measured under a reference measurement condition, an end on a first side in the tire circumferential direction of each of the center land portion is located on the first side in the tire circumferential direction relative to an end on the first side in the tire circumferential direction of each of the shoulder land portion.

## Description

### TECHNICAL FIELD

This disclosure relates to a tire.

This application claims priority based on Japanese Patent Application No. 2022-201606, filed in Japan on December 16, 2022, and the entire contents of which are incorporated herein by reference.

### BACKGROUND

There have been tires comprising a main groove on a tread surface (for example, see Patent Document 1).

### CITATION LIST

### Patent Literature

PTL 1: JP 2008-126931 A

### SUMMARY

### (Technical Problem)

In recent years, in order to reduce the weight and rolling resistance of tires, there have been some studies conducted on reducing the gauge of tread rubber of tires. When the gauge of tread rubber of tires is made thinner, the groove depth of a main groove tends to become shallower, which may result in reduced hydroplaning performance.

An object of the present disclosure is to provide a tire which is capable of obtaining good hydroplaning performance even if the gauge of the tread rubber is made thin.

### (Solution to Problem)

[1] A tire, wherein
   a tread surface is provided with:
      a plurality of main grooves each extending in a tire circumferential direction;
      a pair of shoulder land portions, which are defined between a pair of main grooves that are located on an outermost side in a tire width direction among the plurality of main grooves and a pair of ground contact edges; and
      one or more center land portions, which are defined between the plurality of main grooves, wherein
   in a footprint measured under a reference measurement condition, an end on a first side in the tire circumferential direction of each of the center land portion is located on the first side in the tire circumferential direction relative to an end on the first side in the tire circumferential direction of each of the shoulder land portion.

### (Advantageous Effect)

According to the present disclosure, it is possible to provide a tire which is capable of obtaining good hydroplaning performance even if the gauge of the tread rubber is made thin.

### BRIEF DESCRIPTION OF THE DRAWINGS

In the accompanying drawings:
FIG. 1 is a schematic view that illustrates a footprint and a contact surface of a tire according to one embodiment of the present disclosure under a reference measurement condition;
FIG. 2 is a developed view that illustrates a tread surface of the tire in Figure 1 when it is developed on a flat surface;
FIG. 3 is a drawing that illustrates an example of the internal structure of a tire that can be applied to a tire according to any embodiment of the present disclosure, and is a cross-sectional view in the tire width direction schematically illustrating a cross-section of a tire half portion in the tire width direction;
FIG. 4 is a drawing that explains the behavior of the tire in Figure 1 when it is rolling on a road surface that is wet with water;
FIG. 5 is a schematic view that illustrates a footprint and a contact surface of a tire according to a reference example; and
FIG. 6 is a drawing that explains the behavior of the tire in Figure 5 when it is rolling on a road surface that is wet with water.

### DETAILED DESCRIPTION

The tire according to the present disclosure can be used for any type of four-wheeled vehicle tire, and is particularly suitable for use in passenger vehicle tires. In addition, the tire of the present disclosure can be used for pneumatic tires.

Hereinafter, an embodiment of a tire according to the present disclosure will be described by way of example with reference to the drawings.

The same components and parts are designated by the same reference numerals in each drawing.

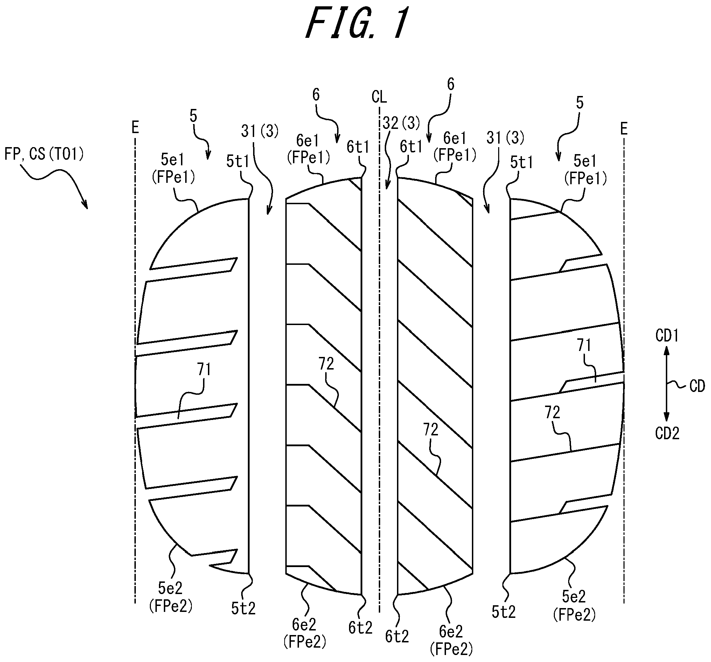

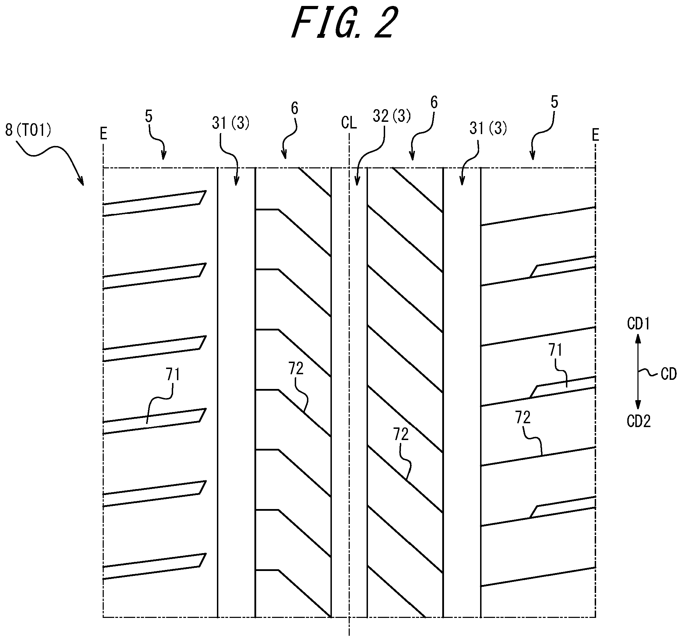

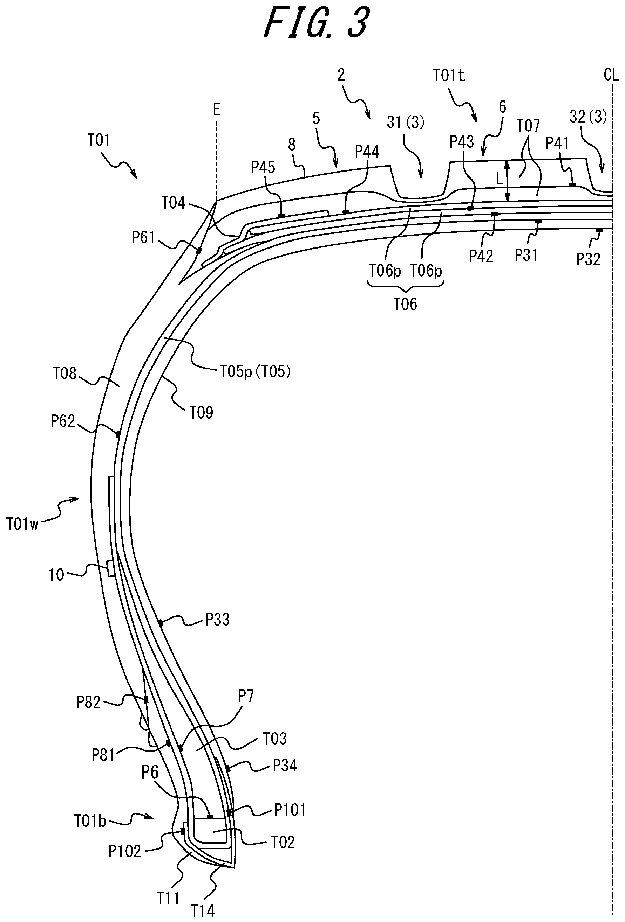

Figure 1 is a schematic view that illustrates a footprint FP and a contact surface CS of a tire TO1 according to one embodiment of the present disclosure under a reference measurement condition. For convenience, the footprint FP and the contact surface CS of the tire TO1 are illustrated in the same drawing in Figure 1. The a reference measurement condition are described later. Figure 2 is a developed view that illustrates a tread surface 8 of the tire TO1 in Figure 1 when it is developed on a flat surface. Figure 3 is a drawing that illustrates an example of the internal structure of a tire that can be applied to the tire TO1 according to any embodiment of the present disclosure, and is a cross-sectional view in the tire width direction schematically illustrating a cross-section of a tire half portion 2 of the tire T01 (one side of the tire T01 relative to the tire equatorial plane CL) in the tire width direction.

The tire T01 of this embodiment is configured as a passenger vehicle pneumatic tire. However, the tire TO1 of each embodiment of the present disclosure can be configured as a tire for any type of four-wheeled vehicle, and can be configured as a passenger vehicle tire in particular. In addition, the tire T01 of each embodiment of the present disclosure can be suitably configured as a pneumatic tire.

As illustrated in Figure 3, the tire TO1 of each embodiment of the present disclosure comprises a tread portion T01t, a pair of sidewall portions TO1w extending from both ends in the tire width direction of the tread portion T01t to the inner side in the tire radial direction, and a pair of bead portions T01b provided at the end portions on the inner side in the tire radial direction of each sidewall portion TO1w. The bead portion T01b is configured so that when the tire T01 is mounted on a prescribed rim, it will come into contact with the prescribed rim on the inner side in the tire radial direction and on the outer side in the tire width direction.

In the tread portion T01t, tread rubber T07 is located on the outer side in the tire radial direction of a belt T06. The tread rubber T07 constitutes the tread surface 8, which is the surface on the outer side in the tire radial direction of the tread portion T01t. As illustrated in Figure 2, the tread surface 8 has a tread pattern formed on it.

In this document, the "footprint (FP)" (Figure 1) shall be measured under the reference measurement condition. The " reference measurement condition" refers to the state in which the tire is mounted on the prescribed rim and filled with prescribed internal pressure, the tire camber angle is set to 0°, and the tire is loaded with 70% of the maximum load. The footprint (FP) is a representation of the shape of the contact surface (CS) of a tire under the reference measurement condition.

In this document, the "tread contact surface (8)" (Figure 2) refers to the entire outer circumference of the tire that comes into contact with the road surface when a tire that has been assembled on the prescribed rim and filled with the prescribed internal pressure is rolled with the maximum load applied.

In this document, the "ground contact edge (E)" refers to the end of the tread surface (8) in the tire width direction.

In this document, the "ground contact width" refers to the distance in the tread width direction between a pair of ground contact edges of the tread surface (8).

As used herein, the "prescribed rim" refers to the standard prescribed rim in the applicable size (Measuring Rim in ETRTO's STANDARDS MANUAL and Design Rim in TRA's YEAR BOOK) as described or as may be described in the future in the industrial standard, which is valid for the region in which the tire is produced and used, such as JATMA YEAR BOOK of JATMA (Japan Automobile Tyre Manufacturers Association) in Japan, STANDARDS MANUAL of ETRTO (The European Tyre and Rim Technical Organization) in Europe, and YEAR BOOK of TRA (The Tire and Rim Association, Inc.) in the United States (That is, the above-mentioned "prescribed rim" includes current sizes as well as future sizes to be listed in the aforementioned industrial standards. An example of the "future sizes to be listed" could be the sizes listed as "FUTURE DEVELOPMENTS" in the ETRTO 2013 edition.). For sizes not listed in these industrial standards, the term "prescribed rim" refers to a rim with a width corresponding to the bead width of the pneumatic tire.

As used herein, the "prescribed internal pressure" refers to the air pressure (maximum air pressure) corresponding to the maximum load capacity of a single wheel in the applicable size and ply rating, as described in the aforementioned JATMA YEAR BOOK and other industrial standards. In the case that the size is not listed in the aforementioned industrial standards, the "prescribed internal pressure" refers to the air pressure (maximum air pressure) corresponding to the maximum load capacity specified for each vehicle in which the tire is mounted.

As used herein, the "maximum load" refers to the load corresponding to the maximum load capacity.

It will be noted that the air as used herein can also be replaced with inert gases such as nitrogen gas.

Unless otherwise specified, the dimensions of each element, such as grooves and land portions, shall be measured with the tire mounted on the prescribed rim, filled with the prescribed internal pressure, and unloaded. Here, the dimensions of each element of the tread, such as grooves and land portions, shall be measured in a developed view of the tread surface. In this document, the "developed view of the tread surface" refers to a plan view of the surface of the tread when the tread surface is developed on a flat surface.

For the sake of clarity, some drawings indicate the tire circumferential direction with an arrow CD, the first side in the tire circumferential direction (one side in the tire circumferential direction) with an arrow CD1, and the second side in the tire circumferential direction (the other side in the tire circumferential direction) with an arrow CD2.

As illustrated in Figure 2, the tread surface 8 is provided with a plurality of main grooves 3 that extend in the tire circumferential direction; a pair of land portions 5 (hereinafter, also referred to as "shoulder land portions 5"), which are defined between a pair of main grooves 3 that are located on the outermost side in the tire width position among the plurality of main grooves 3 (hereinafter, also referred to as "shoulder main grooves 31") and a pair of ground contact edges E; and one or more land portions 6 (hereinafter, also referred to as "center land portions 6") which are defined between the plurality of main grooves 3. In this document, among the plurality of main grooves 3, each main groove 3 located on the inner side in the tire width direction relative to the pair of shoulder main grooves 31 is referred to as a "center main groove 32". The pair of shoulder main grooves 31 are located on both sides of the tire equatorial plane CL.

In the examples illustrated in Figures 1 and 2, three main grooves are provided, among which one is the center main groove 32, and two center land portions 6 are provided. However, the number of the main grooves 3 may be two, or four or more. In addition, the center main groove 32 does not have to be provided, or two or more may be provided. In addition, the number of the center land portions 6 may be one, or three or more.

In the example in Figures 1 and 2, each main groove 3 extends in a straight line. However, the main groove 3 may also extend in a zigzag shape.

In the example in Figure 2, each shoulder land portion 5 is provided with a plurality of lug grooves 71 extending substantially along the tire width direction, and these plurality of lug grooves 71 are arranged at intervals from one another along the tire circumferential direction. In addition, each of the center land portions 6 and one shoulder land portion 5 are provided with a plurality of sipes 72, and these plurality of sipes 72 are arranged at intervals from one another along the tire circumferential direction.

However, each land portion 5 and 6 may be provided with any grooves and/or sipes.

Each land portion 5 and 6 are preferably formed, as in the example in Figure 2, as a rib (a land portion that is continuous in the tire circumferential direction, i.e., a land portion that is not divided in the tire circumferential direction by a groove that cross the land portion in the tire width direction), respectively. However, each land portion 5 and 6 may be formed in a block row (a land portion composed of a plurality of blocks that are divided in the tire circumferential direction by a plurality of grooves that cross the land portion in the tire width direction), respectively. In addition, among the land portions 5 and 6, some (one or more) land portions may be formed in ribs, while the other land portions may be formed in block rows.

In this embodiment, the tread rubber T07 of the tire TO1 has a thinner gauge L (Figure 3) than that of a general tire. This makes it possible to reduce the weight and rolling resistance of the tire T01.

From the perspective of reducing the weight and rolling resistance of the tire T01, the gauge L of the tread rubber T07 is preferably 7.8 mm or less. In addition, the gauge L of the tread rubber T07 is preferably 6.5 mm or more.

It will be noted that the gauge L of the tread rubber T07 shall be measured in the direction perpendicular to the belt T06, as the thickness from the outermost end of the belt T06 in the tire radial direction to the tread surface 8 in the center land portion 6 in a cross-section in the tire width direction (Figure 3).

In this embodiment, as the tread rubber T07 has a thin gauge L, the depth of each main groove 3 is shallower than that of a general tire. It is desirable to ensure that, of the tread rubber T07, the thickness from the outermost end of the belt T06 in the tire radial direction to the bottom of the main groove 3 is approximately 2 mm (e.g., 1.5 to 2.5 mm). From this perspective, the groove depth of each main groove 3 is preferably 5.8 mm or less. In addition, the groove depth of each main groove 3 is preferably 5.0 mm or more.

As illustrated in Figure 1, in the footprint FP of the tire TO1 of this embodiment, an end 6t1 on the first side in the tire circumferential direction, CD1, of each center land portion 6 is located on the first side in the tire circumferential direction, CD1, relative to an end 5t1 on the first side in the tire circumferential direction, CD1, of each shoulder land portion 5. Consequently, in the footprint FP, each center land portion 6 protrudes to the first side in the tire circumferential direction, CD1, more than each shoulder land portion 5, and it can be said that the outer periphery FPe1 on the first side in the tire circumferential direction, CD1, of the footprint FP (that is, the contact surface CS) schematically has a curved shape that protrudes to the first side in the tire circumferential direction, CD1, with a vertex near the tire equatorial plane CL.

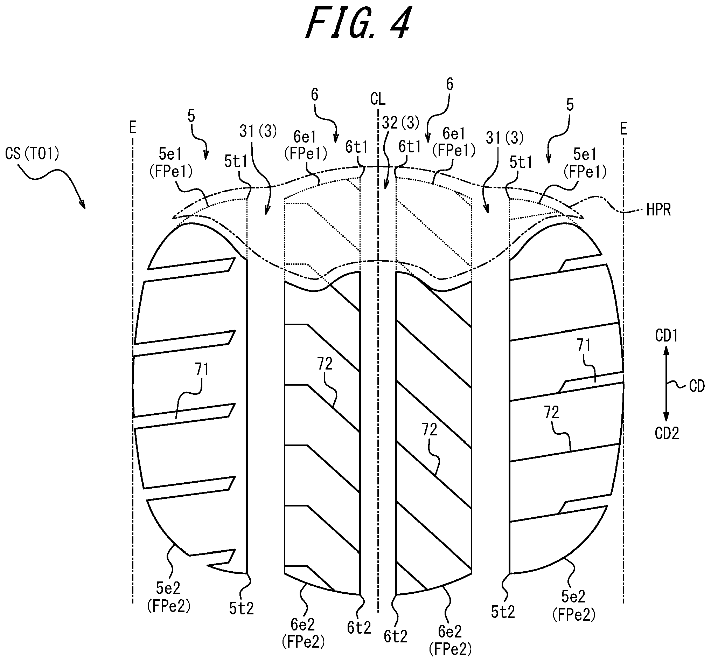

Figure 4 schematically illustrates the contact surface CS of the tire TO1 of this embodiment when the tire is rolling to the second side in the tire circumferential direction, CD2, on a road surface that is wet with water. In this embodiment, as described above, in the footprint FP, the end 6t1 on the first side in the tire circumferential direction, CD1, of each center land portion 6 is located on the first side in the tire circumferential direction, CD1, relative to the end 5t1 on the first side in the tire circumferential direction, CD1, of each shoulder land portion 5, and consequently, during the rotation of the tire T01, the outer periphery FPe1 on the first side in the tire circumferential direction, CD1, of the contact surface CS has schematically a curved shape that protrudes to the first side in the tire circumferential direction, CD1, with a vertex near the tire equatorial plane CL. This effectively prevents water from entering the contact surface CS, and in turn prevents the formation of a hydroplaning region HPR, thereby improving hydroplaning performance. In the hydroplaning region HPR, a water film intervenes between the contact surface CS and the road surface, causing the tire TO1 to float above the road surface.

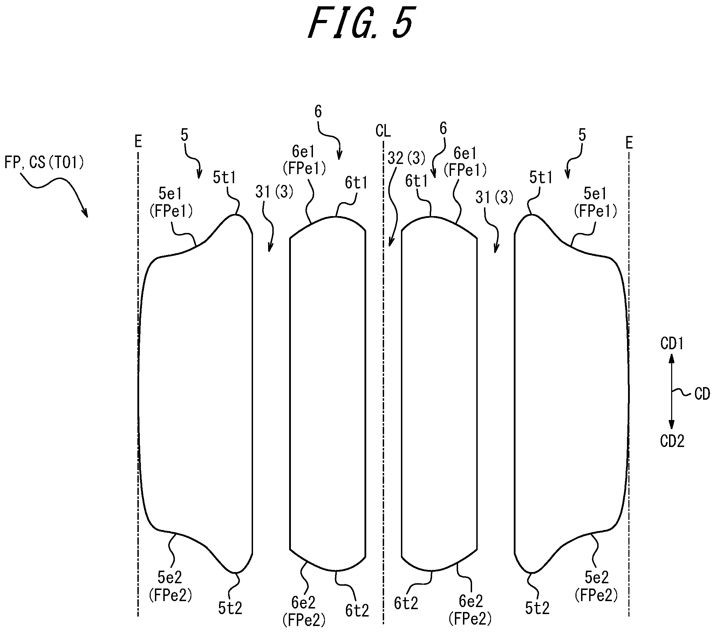

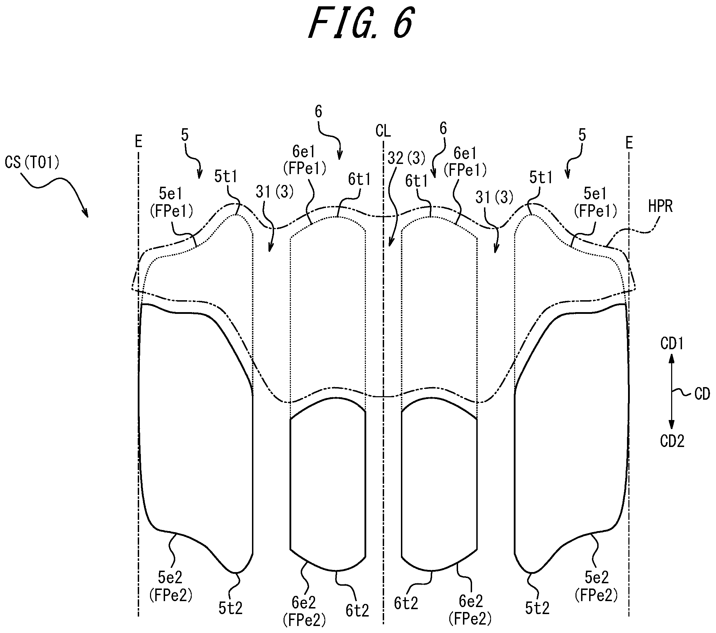

Figure 5 is a schematic view that illustrates the footprint FP and the contact surface CS of the tire TO1 according to a reference example, and Figure 6 is a drawing that explains the behavior of the tire TO1 in Figure 5 when it is rolling to the second side in the tire circumferential direction, CD2, on a road surface that is wet with water. In Figures 5 and 6, the illustration of grooves and sipes other than the main grooves 3 has been omitted. As illustrated in Figure 5, in the reference example tire T01, in the footprint FP, the end 6t1 on the first side in the tire circumferential direction, CD1, of each center land portion 6 is located in the same position in tire circumferential direction compared to the end 5t1 on the first side in the tire circumferential direction, CD1, of each shoulder land portion 5, and as a result, the outer periphery FPe1 on the first side in the tire circumferential direction, CD1, of the footprint FP (that is, the contact surface CS) can be said to have a roughly linear shape parallel to the tire width direction. In this case, as illustrated in Figure 6, water is likely to enter the contact surface CS during the tire T01 is rolling, and this in turn makes it easier to form a hydroplaning region HPR. As a result, there is a risk that the hydroplaning performance will not be very good. Although the illustration is omitted, in the footprint FP, when the end 6t1 on the first side in the tire circumferential direction, CD1, of each center land portion 6 is located on the second side in the tire circumferential direction, CD2, relative to the end 5t1 on the first side in the tire circumferential direction, CD1, of each shoulder land portion 5, that is, when the outer periphery FPe1 on the first side in the tire circumferential direction, CD1, of the footprint FP (that is, the contact surface CS) is roughly concave toward the second side in the tire circumferential direction, CD2, and has a curved shape with a vertex near the tire equatorial plane CL, water can easily enter the contact surface CS, and there is a risk that the hydroplaning performance will not be very good.

In the case of the tire T01 of this embodiment (Figures 1 to 4), as described above, the gauge L of the tread rubber T07 (Figure 3) is made thinner than that of a general tire, and as a result, the depth of each main groove 3 is made shallower. In general, there is a tendency for hydroplaning performance to decrease as the depth of the main groove 3 becomes shallower. In order to prevent a decrease in hydroplaning performance, it is conceivable to increase the groove volume by, for example, increasing the groove width of the main groove 3, thereby improving the drainage. However, when the gauge L of the tread rubber T07 is made thinner, it will be difficult to increase the groove volume significantly in the first place, and it will also be difficult to sufficiently prevent the deterioration of hydroplaning performance by means of increasing groove volume. On the other hand, in this embodiment, by adjusting the shape of the footprint FP (and hence the contact surface CS) as described above, it is possible to obtain good hydroplaning performance while keeping the tread rubber T07 gauge L thin and effectively preventing a decline in hydroplaning performance.

It will be noted that the shape of the footprint FP (and hence the contact surface CS) described above contributes to improved hydroplaning performance not only for tires such as the tire TO1 with a thinner gauge L of the tread rubber T07, but also for tires with a gauge L of the tread rubber T07 equivalent to that of general tires.

As explained above, even if the gauge of the tread rubber is made thinner, it is possible to obtain good hydroplaning performance by means of the shape of the footprint FP (and hence the contact surface CS) described above.

From the same perspective, it is also preferable for the footprint FP to have the same configuration as above on the second side in the tire circumferential direction, CD2. In other words, as illustrated in Figure 1, it is preferable that, in the footprint FP, the end 6t2 on the second side in the tire circumferential direction, CD2, of each center land portion 6 of the tire TO1 is located on the second side in the tire circumferential direction, CD2, relative to the end 5t2 on the second side in the tire circumferential direction, CD2, of each shoulder land portion 5. This improves the hydroplaning performance when the tire TO1 rolls to the first side in the tire circumferential direction, CD1.

In this document, the ends 5t1 and 6t1 on the first side in the tire circumferential direction, CD1, of the land portions 5 and 6 in the footprint FP refer to the most outer points on the first side in the tire circumferential direction, CD1, of the land portions 5 and 6 on the outer periphery 5e1, 6e1.

Similarly, in this document, the ends 5t2 and 6t2 on the second side in the tire circumferential direction, CD2, of the land portions 5 and 6 in the footprint FP refer to the most outer points on the second side in the tire circumferential direction, CD2, of the land portions 5 and 6 on the outer periphery 5e2, 6e2.

As illustrated in Figure 1, it is preferable that, in the footprint FP, the outer periphery FPe1 on the first side in the tire circumferential direction, CD1, extends in such a way that, when a part of the outer periphery FPe1 that spans all (one or more, in this embodiment, two) center land portions 6 is viewed as a single unit, this part extends in a direction toward the first side in the tire circumferential direction, CD1, as it moves toward the inner side in the tire width direction. As a result, it can be said that the outer periphery FPe1 on the first side in the tire circumferential direction, CD1, of the footprint FP (and hence the contact surface CS) is roughly protruding to the first side in the tire circumferential direction, CD1, and has a curved shape with a vertex near the tire equatorial plane CL. This allows, as illustrated in Figure 4, the water to be more effectively prevented from entering the contact surface CS when the tire T01 is rolling to the second side in the tire circumferential direction, CD2, on a road surface that is wet with water, thereby improving the hydroplaning performance.

From the same perspective, it is also preferable for the footprint FP to have the same configuration as above on the second side in the tire circumferential direction, CD2. That is, it is preferable for the tire T01 that the outer periphery FPe2 on the second side in the tire circumferential direction, CD2, extends in such a way that, when a part of the outer periphery FPe2 that spans all (one or more, in this embodiment, two) center land portions 6 is viewed as a single unit, this part extends in a direction toward the second side in the tire circumferential direction, CD2, as it moves toward the inner side in the tire width direction. This improves the hydroplaning performance when the tire TO1 rolls to the first side in the tire circumferential direction, CD1.

In this document, the outer periphery FPe1 on the first side in the tire circumferential direction, CD1, of the footprint FP refers to the part of the outer periphery of the footprint FP that is on the first side in the tire circumferential direction, CD1, and specifically, it refers to the part of the outer periphery of the footprint FP that extends from the end on the first side in the tire circumferential direction, CD1, on one ground contact edge E to the end on the first side in the tire circumferential direction, CD1, on the other ground contact edge E.

In the footprint FP, the outer periphery 5e1 on the first side in the tire circumferential side, CD1, of the shoulder land portion 5 refers to the part of the outer periphery of the shoulder land portion 5, that extends from the end on the first side in the tire circumferential direction, CD1, on the shoulder main groove 31 to the end on the first side in the tire circumferential direction, CD1, on the ground contact edge E. In the footprint FP, the outer periphery 6e1 on the first side in the tire circumferential side, CD1, of the center land portion 6 refers to the part of the outer periphery of the center land portion 6, that extends from the end on the first side in the tire circumferential direction, CD1, on one main groove adjacent to the center land portion 6 to the end on the first side in the tire circumferential direction, CD1, on the other main groove adjacent to the center land portion 6.

In addition, in this document, the outer periphery FPe2 on the second side in the tire circumferential direction, CD2, of the footprint FP refers to the part of the outer periphery of the footprint FP that is on the second side in the tire circumferential direction, CD2, and specifically, it refers to the part of the outer periphery of the footprint FP that extends from the end on the second side in the tire circumferential direction, CD2, on one ground contact edge E to the end on the second side in the tire circumferential direction, CD2, on the other ground contact edge E.

In the footprint FP, the outer periphery 5e2 on the second side in the tire circumferential side, CD2, of the shoulder land portion 5 refers to the part of the outer periphery of the shoulder land portion 5, that extends from the end on the second side in the tire circumferential direction, CD2, on the shoulder main groove 31 to the end on the second side in the tire circumferential direction, CD2, on the ground contact edge E. In the footprint FP, the outer periphery 6e2 on the second side in the tire circumferential side, CD2, of the center land portion 6 refers to the part of the outer periphery of the center land portion 6, that extends from the end on the second side in the tire circumferential direction, CD2, on one main groove adjacent to the center land portion 6 to the end on the second side in the tire circumferential direction, CD2, on the other main groove adjacent to the center land portion 6.

In this document, when referring to the shape or dimensions of the outer peripheries of the footprint FP or the land portions 5 and 6, the existence of the grooves is to be ignored, that is, the shape and dimensions of the hypothetical outer peripheries that smoothly connect the outer peripheries that are divided by the grooves (main groove 3, lug groove 71, etc.) are to be referred to.

As illustrated in Figure 1, it is preferable that the outer periphery FPe1 on the first side in the tire circumferential direction, CD1, of the foot print FP extends, throughout its entire length, toward the first side in the tire circumferential direction, CD1, as it moves toward the inner side in the tire width direction. As a result, it can be said that the outer periphery FPe1 on the first side in the tire circumferential direction, CD1, of the footprint FP (and hence the contact surface CS) is roughly protruding to the first side in the tire circumferential direction CD1 while having a curved shape with a vertex near the tire equatorial plane CL. This allows, as illustrated in Figure 4, the water to be more effectively prevented from entering the contact surface CS when the tire TO1 is rolling to the second side in the tire circumferential direction, CD2, on a road surface that is wet with water, thereby improving the hydroplaning performance.

From the same perspective, it is also preferable for the footprint FP to have the same configuration as above on the second side in the tire circumferential direction, CD2. That is, it is preferable that the outer periphery FPe2 on the second side in the tire circumferential direction, CD2, of the foot print FP extends, throughout its entire length, toward the second side in the tire circumferential direction CD1 as it moves toward the inner side in the tire width direction. This improves the hydroplaning performance when the tire TO1 rolls to the first side in the tire circumferential direction, CD1.

As illustrated in Figure 1, it is preferable that the outer periphery 5e1 on the first side in the tire circumferential direction, CD1, of the foot print FP at each of the shoulder land portion 5 extends toward the first side in the tire circumferential direction, CD1, as it moves toward the inner side in the tire width direction, and has a curved shape that is convexly curved toward the first side in the tire circumferential direction, CD1. As a result, as illustrated in Figure 4, when the tire TO1 is rolling on a road surface that is wet with water, the water that is trying to enter the contact surface CS can be effectively drained to the outer side in the tire width direction, on the shoulder side (outer side in the tire width direction). This makes it possible to more effectively prevent water from entering the contact surface CS, and improves the hydroplaning performance.

From the same perspective, it is also preferable for the footprint FP to have the same configuration as above on the second side in the tire circumferential direction, CD2. That is, as illustrated in Figure 1, it is preferable that the outer periphery 5e2 on the second side in the tire circumferential direction, CD2, of the foot print FP at each of the shoulder land portion 5 extends toward the second side in the tire circumferential direction, CD2, as it moves toward the inner side in the tire width direction, and has a curved shape that is convexly curved toward the second side in the tire circumferential direction, CD2. This improves the hydroplaning performance when the tire TO1 rolls to the first side in the tire circumferential direction, CD1.

As illustrated in Figure 1, it is preferable that, in the footprint FP, the ends 5t1 and 6t1 on the first side in the tire circumferential direction, CD1, of each land portion 5 and 6, which are located more inward in the tire width direction, are located closer to the first side in the tire circumferential direction, D1. As a result, it can be said that the outer periphery FPe1 on the first side in the tire circumferential direction, CD1, of the footprint FP (and hence the contact surface CS) is roughly protruding to the first side in the tire circumferential direction, CD1, while having a curved shape with a vertex near the tire equatorial plane CL. This allows, as illustrated in Figure 4, the water to be more effectively prevented from entering the contact surface CS when the tire TO1 is rolling to the second side in the tire circumferential direction, CD2, on a road surface that is wet with water, thereby improving the hydroplaning performance.

From the same perspective, it is also preferable for the footprint FP to have the same configuration as above on the second side in the tire circumferential direction, CD2. That is, as illustrated in Figure 1, it is preferable for the tire T01 that, in the footprint FP, the ends 5t1 and 6t1 on the second side in the tire circumferential direction, CD2, of each land portion 5 and 6, which are located more inward in the tire width direction, are located closer to the second side in the tire circumferential direction, D2. This improves the hydroplaning performance when the tire TO1 rolls to the first side in the tire circumferential direction, CD1.

Although the illustration is omitted, when three or more center land portions 6 are provided on the tread surface 8, it is preferable that, in the footprint FP, the end 6t1 on the first side in the tire circumferential direction, CD1, of each center land portion 6, which is located more inward in the tire width direction, is located closer to the first side in the tire circumferential direction, CD1, or is located at the same position in tire circumferential direction as the other ends 6t1. As a result, it can be said that the outer periphery FPe1 on the first side in the tire circumferential direction, CD1, of the footprint FP (and hence the contact surface CS) is roughly protruding to the first side in the tire circumferential direction, CD1, while having a curved shape with a vertex near the tire equatorial plane CL. This allows the water to be more effectively prevented from entering the contact surface CS when the tire TO1 is rolling to the second side in the tire circumferential direction, CD2, on a road surface that is wet with water, thereby improving the hydroplaning performance.

From the same perspective, it is also preferable for the footprint FP to have the same configuration as above on the second side CD2 in the tire circumferential direction. That is, although the illustration is omitted, when three or more center land portions 6 are provided on the tread surface 8, it is preferable that, in the footprint FP, the end 6t2 on the second side in the tire circumferential direction CD2 of each center land portion 6, which is located more inward in the tire width direction, is located closer to the second side in the tire circumferential direction CD2 or is located at the same position in tire circumferential direction as the other ends 6t2. This improves the hydroplaning performance when the tire T01 rolls to the first side CD1 in the tire circumferential direction.

In the example in Figure 1, in the footprint FP, the end 6t1 on the first side in the tire circumferential direction, CD1, of each center land portion 6 is located at the inner end in the tire width direction of the outer periphery 6e1 on the first side in the tire circumferential direction, CD1, of each center land portion 6. However, in the footprint FP, the end 6t1 on the first side in the tire circumferential direction, CD1, of each center land portion 6 may be located at any position on the outer periphery 6e1 on the first side in the tire circumferential direction, CD1, of each center land portion 6.

The same is true for the second side in the tire circumferential direction, CD2, in the footprint FP. That is, in the example in Figure 1, in the footprint FP, the end 6t2 on the second side in the tire circumferential direction, CD2, of each center land portion 6 is located at the inner end in the tire width direction of the outer periphery 6e2 on the second side in the tire circumferential direction, CD2, of each center land portion 6. However, in the footprint FP, the end 6t2 on the second side in the tire circumferential direction, CD2, of each center land portion 6 may be located at any position on the outer periphery 6e2 on the second side in the tire circumferential direction, CD2, of each center land portion 6.

The shape of the footprint FP of the tire T01 can be adjusted using various methods.

For example, the shape of the footprint FP of the tire T01 can be adjusted by adjusting the shape of the forming surface of the mold used to vulcanize the tire T01, and thereby adjusting the curved shape (R shape) of the crown portion or the amount or rate of fall of the tread portion T01t in a cross-section in the tire width direction of the tire T01.

In addition, the shape of the footprint FP of the tire TO1 can be adjusted by adjusting the shape of the forming surface of the mold used to vulcanize the tire TO1, and thereby adjusting the curved shape (R shape) of each land portion 5 and 6 in a cross-section in the tire width direction of the tire TO1.

In addition, the shape of the footprint FP of the tire TO1 can be adjusted by adjusting the reinforcement provided by the belt T06.

The ground contact shape rate of the footprint FP is preferably 80 to 90%.

Here, the ground contact shape rate of the footprint FP refers to the ratio of the ground contact length (length in the tire circumferential direction of the footprint FP) at a position in the tire width direction that locates at 80% of half the contact width (i.e., 40% of the contact width) away from the tire equatorial plane CL, to the ground contact length (length in the tire circumferential direction of the footprint FP) on the tire equatorial plane CL.

In each example described in this document, the tire T01 may have any internal structure. The following is an explanation of an example of the internal structure of the tire T01, with reference to Figure 3. The internal structure of the example in Figure 3 is particularly suitable when applied to passenger vehicle tires.

In the example illustrated in Figure 3, the tire TO1 comprises a pair of bead cores T02, a pair of bead fillers T03, a carcass T05, a belt T06, a tread rubber T07, a side rubber T08, and an inner liner T09.

Each bead core T02 is embedded in a corresponding bead portion T01b. The bead core T02 comprises a plurality of bead wires that are covered with rubber. The bead wires may be made of metal (e.g. steel) or organic fibers such as polyester, nylon, rayon, or aramid. For example, the bead wires may be made from monofilaments or stranded wires.

Each bead filler T03 is located on the outer side of the corresponding bead core T02 in the tire radial direction. The bead filler T03 extends in a tapered shape toward the outer side in the tire radial direction. The bead filler T03 is made of rubber.

In general, bead fillers are sometimes called "stiffeners".

The carcass T05 straddles a pair of bead cores T02 in a toroidal shape. The carcass T05 is composed of one or more (in the example in Figure 2, one) carcass ply T05p. Each carcass ply T05p contains one or more carcass cords and coating rubber that covers the carcass cords. The carcass cords can be formed from monofilaments or stranded wires.

The carcass cord may be made of metal (e.g. steel) or of organic fibers such as polyester, nylon, rayon, or aramid.

The carcass T05 is preferably of radial construction, but may also be of bias construction.

The belt T06 is arranged on the outer side in the tire radial direction relative to the crown portion of the carcass T05. The belt T06 comprises one or more (in the example in Figure 2, two) belt plies T06p. Each belt ply T06p contains one or more belt cords and coating rubber that covers the belt cords. The belt cords can be formed from monofilaments or stranded wires. The belt cords can be made from metal (e.g. steel) or from organic fibers such as polyester, nylon, rayon, or aramid.

The tread rubber T07 is arranged on the outer side in the tire radial direction of the belt T06 in the tread portion T01t. The tread rubber T07 constitutes the tread surface 8, which is the surface on the outer side in the tire radial direction of the tread portion T01t. The tread pattern is formed on the tread surface 8.

The side rubber T08 is located in the sidewall portion T01w. The side rubber T08 constitutes the outer surface on the outer side in the tire width direction of the sidewall portion TO1w. The side rubber T08 is located on the outer side in the tire width direction relative to the carcass T05. The side rubber T08 is located on the outer side in the tire width direction relative to the bead filler T03. The side rubber T08 is molded as one piece with the tread rubber T07.

The inner liner T09 is arranged on the tire inner side of the carcass T05, and may be laminated on the tire inner side of the carcass T05, for example. The inner liner T09, for example, is made of butyl-based rubbers, which have low air permeability. The butyl-based rubbers include, for example, butyl rubber and its derivative, halogenated butyl rubber. The inner liner T09 can be made not only of butyl-based rubber, but also of other rubber compositions, resins, or elastomers.

The illustration is omitted, but the tire T01 may comprise cushioning rubber between the carcass T05 and the tread rubber T07 in the tire radial direction. The cushioning rubber may be located near the end portion in the tire width direction of the belt T06.

As illustrated in Figure 3, the tire T01 may comprise a rubber chaffer T11 in a part of each bead portion T01b which is configured to contact the prescribed rim.

As illustrated in Figure 3, the tire T01 may comprise one or more (in the example in Figure 3, one) wire chaffers T14 around each bead core T02. The wire chaffer T14 may be arranged on the opposite side of the bead core T02 with respect to the carcass T05, as in the example in Figure 3. The wire chaffer T14 is made of metal (e.g., steel).

Although the illustration is omitted, the tire TO1 may have one or more nylon chafers around each bead core T02. The nylon chafer may be positioned on the opposite side of the bead core T02 with respect to the carcass T05, as in the example in Figure 2. The nylon chafer is made of nylon.

Although the illustration is omitted, the tire TO1 may have a hat rubber between the bead filler T03 and the side rubber T08 in the tire width direction in each tire half portion.

As illustrated in Figure 3, the tire T01 may comprise an RF tag 10 as a communication device 100. The RF tag 10 comprises an IC chip and an antenna. For example, the RF tag 10 may be disposed, for example, by being sandwiched between a plurality of members of the same type or different types that make up the tire T01. This makes it easier to attach the RF tag 10 during manufacturing of the tire T01, and improves the productivity of tires TO1 comprising the RF tag 10. In the example illustrated in Figure 3, the RF tag 10 may be disposed by being sandwiched between the bead filler T03 and other components adjacent to the bead filler T03. The RF tag 10 may be embedded in any of the components that make up the tire T01. In this way, the load applied to the RF tag 10 can be reduced compared to when it is disposed by being sandwiched between a plurality of components that make up the tire T01. This improves the durability of the RF tag 10. In this example, the RF tag 10 may be embedded in rubber components such as tread rubber T07 and side rubber T08. It is preferable that the RF tag 10 is not disposed at positions, at the boundary between components with different levels of rigidity in the direction of peripheral length, which is the direction along the outer surface of the tire in a cross-sectional view in the tire width direction. In this way, the RF tag 10 is not disposed at positions where strain is likely to be concentrated based on the rigidity gap. As a result, the load applied to the RF tag 10 can be reduced. This improves the durability of the RF tag 10. In this example, it is preferable that the RF tag 10 is not disposed at the boundary between the end portion of the carcass T05 and the components adjacent to this end portion of the carcass T05 (e.g. side rubber T08, etc.) in a cross-sectional view in the tire width direction. The number of RF tags 10 is not particularly limited. The tire TO1 may include only one RF tag 10, or may include two or more RF tags 10. Here, the RF tag 10 is described as an example of a communication device, but a communication device other than the RF tag 10 may also be used.

For example, the RF tag 10 can be disposed in the tread portion T01t of the tire T01. In this way, the RF tag 10 will not be damaged by side cuts on the tire TO1. For example, the RF tag 10 may be disposed in the center of the tread in the tire width direction. The center of the tread is a position where the deflection is not concentrated in the tread portion T01t. In this way, the load applied to the RF tag 10 can be reduced. This improves the durability of the RF tag 10. In addition, this also prevents the tire from having differences in communication performance of the RF tag 10 from both outer sides in the tire width direction of the tire T01. In this example, the RF tag 10 may be disposed, for example, within a range of 1/2 of the tread width in tire width direction, with the tire equatorial plane as the center CL. For example, the RF tag 10 may be disposed at the tread end portion in the tire width direction. If the position of the reader that communicates with the RF tag 10 is predetermined, the RF tag 10 can be disposed, for example, on the tread end portion on one side close to this reader. In this example, the RF tag may be disposed, for example, within a range of 1/4 of the tread width in the tire width direction, with the tread end as the outer end.

The RF tag 10 may be disposed, for example, closer to the tire cavity than the carcass T05 which includes one or more carcass plies T05p straddling bead portions T01b. In this way, the RF tag 10 becomes less susceptible to damage from external impacts to the tire T01, such as side cuts and nail punctures, etc. As an example, the RF tag 10 may be disposed in close contact with the surface of the carcass T05 on the tire cavity side (Refer to point P31 in Figure 3.). As another example, when there is another component closer to the tire cavity than the carcass T05, the RF tag 10 may be disposed, for example, between the carcass T05 and this other component located closer to the tire cavity than the carcass T05. An example of another component located closer to the tire cavity than the carcass T05 is an inner liner T09 that forms the inner surface of the tire. As another example, the RF tag 10 may be attached to the inner surface of the tire facing the tire cavity (Refer to point P32 in Figure 3.). By having a configuration in which the RF tag 10 is attached to the inner surface of the tire, it is easy to attach the RF tag 10 to the tire T01, and to inspect and replace the RF tag 10. In other words, the ease of attachment and maintenance of the RF tag 10 can be improved. In addition, by attaching the RF tag 10 to the inner surface of the tire, it is possible to prevent the RF tag 10 from becoming the core of tire failures, compared to a configuration in which the RF tag 10 is embedded inside the tire TO1.

In addition, when the carcass T05 has a plurality of carcass plies T05t and there is a position where the plurality of carcass plies T05t are overlapped each other, the RF tag 10 may be disposed between the overlapped carcass plies T05t.

For example, the RF tag 10 may be disposed, in the tread portion T01t of the tire T01, on the outer side in the tire radial direction of a belt T06 that includes one or more belt plies T06p. As an example, the RF tag 10 may be disposed on the outer side of the belt T06 in the tire radial direction and in close contact with the same (Refer to point P44 in Figure 3.). As another example, when a belt reinforcement layer T04 is provided, the RF tag 10 may be disposed on the outer side of the belt reinforcement layer T04 in the tire radial direction and in close contact with the same (Refer to point P45 in Figure 3.). As yet another example, the RF tag 10 may be embedded in the tread rubber T07 on the outer side of the belt T06 in the tire radial direction (Refer to point P41 in Figure 3.). By disposing the RF tag 10, in the tread portion T01t of the tire T01, on the outer side of the belt T06 in the tire radial direction, communication with the RF tag 10 from the outer side of the tire TO1 in the radial direction is less likely to be disturbed by the belt T06. This improves the communication performance with the RF tag 10 from the outer side of the tire TO1 in the tire radial direction.

In addition, the RF tag 10 may be disposed, in the tread portion T01t of the tire T01, on the inner side of the belt T06 in the tire radial direction. In this way, the outer side of the RF tag 10 in the tire radial direction is covered by the belt T06, so the RF tag 10 is less likely to be damaged by impacts from the tread surface or by nails sticking into it. As an example of this, the RF tag 10 may be disposed between the belt T06 and the carcass T05, which is located on the inner side of the belt T06 in the tire radial direction (Refer to point P42 in Figure 3.).

In addition, when the belt T06 comprises a plurality of belt plies T06p, the RF tag 10 may be disposed between any two belt plies T06p in the tread portion T01t of the tire TO1. In this way, the outer side of the RF tag 10 in the tire radial direction is covered by one or more belt plies T06p, so the RF tag 10 becomes less likely to be damaged by impacts from the tread surface or by nails sticking into it.

The RF tag may be disposed, for example, between cushion rubber and the tread rubber T07, or between the cushion rubber and the side rubber T08. In this way, the impact on the RF tag 10 can be mitigated by the cushion rubber. This improves the durability of the RF tag.

In addition, the RF tag may be embedded in the cushion rubber, for example. Furthermore, the cushion rubber may be composed of a plurality of rubber members of the same or different types that are adjacent to each other. In such a case, the RF tag 10 may be disposed by being sandwiched between the plurality of rubber components that make up the cushioning rubber.

This configuration is particularly suitable when the tire TO1 is a heavy-duty pneumatic tire (e.g., pneumatic tires for trucks and buses, pneumatic tires for off-the-road (construction vehicle) use, etc.).

The RF tag 10 may be disposed, for example, at a position in the sidewall portion T01w or the bead portion T01t of the tire TO1. For example, the RF tag 10 may be disposed on the sidewall portion T01w or the bead portion T01b on one side that is close to the reader that can communicate with the RF tag 10 (Refer to point P6, P62 in Figure 3.). In this way, the communication performance between the RF tag 10 and the reader can be improved. As an example, the RF tag 10 can be disposed between the carcass T05 and the side rubber T08, or between the tread rubber T07 and the side rubber T08 (Refer to point P61 in Figure 3.).

For example, the RF tag 10 may be disposed between a position where the tire T01 has a maximum width and a position of the tread surface in the tire radial direction. In this way, compared to a configuration where the RF tag 10 is disposed on the inner side in the tire radial direction of the tire maximum width position, it is possible to improve the communication performance with the RF tag 10 from the outer side of the tire TO1 in the tire radial direction.

For example, the RF tag 10 may be disposed on the inner side in the tire radial direction of the tire maximum width position. In this way, the RF tag 10 is disposed near the bead portion T01b where rigidity is high. Therefore, the load applied to the RF tag 10 is reduced, which in turn improves the durability of the RF tag 10. As an example, the RF tag 10 may be disposed at a position adjacent to the bead core T02 in the radial direction or the tire width direction. The area around the bead core T02 is less prone to strain. Therefore, the load applied to the RF tag 10 is reduced, which in turn improves the durability of the RF tag 10.

In particular, it is preferable that the RF tag 10 be disposed on the inner side of the tire maximum width position in the tire radial direction and on the outer side of the bead core T02 in the bead portion T01b in the tire radial direction. In this way, the durability of the RF tag 10 can be improved, while the communication between the RF tag 10 and the reader is less likely to be disturbed by the bead core T02 and the communication performance of the RF tag 10 can be improved.

In addition, when the side rubber T08 is composed of a plurality of rubber components of the same or different types that are adjacent to each other in the tire radial direction, the RF tag 10 may be disposed by being sandwiched between the plurality of rubber components that make up the side rubber T08.

The RF tag 10 may be disposed by being sandwiched between the bead filler T03 and the component adjacent to the bead filler T03. In this way, the RF tag 10 can be disposed in a position where the strain is less likely to be concentrated due to the arrangement of the bead filler T03. Therefore, the load applied to the RF tag 10 is reduced, which in turn improves the durability of the RF tag 10.

The RF tag 10 may be disposed, for example, by being sandwiched between the bead filler T03 and the carcass T05. The part of the carcass T05, that sandwiches the RF tag 10 in place together with the bead filler T03, may be located on the outer side in the tire width direction with respect to the bead filler T03, or it may be located on the inner side in the tire width direction with respect to the bead filler T03. When the part of the carcass T05 that sandwiches the RF tag 10 in place together with the bead filler T03 is located on the outer side in the tire width direction of the bead filler T03, the load applied to the RF tag 10 caused by impact or damage to the tire from the outside of the tire TO1 in the tire width direction can be reduced even more. This makes it possible to further improve the durability of the RF tag 10.

In addition, the bead filler T03 may have a portion that is arranged adjacent to the side rubber T08. In such a case, the RF tag 10 may be disposed by being sandwiched between the bead filler T03 and the side rubber T08.

Furthermore, the bead filler T03 may also have a portion that is arranged adjacent to a rubber chaffer T11. In such a case, the RF tag 10 may be disposed by being sandwiched between the bead filler T03 and the rubber chaffer T11.

This configuration is particularly suitable when the tire T01 is a passenger vehicle pneumatic tire.

The RF tag may be disposed between a stiffener T03 and the component adjacent to the stiffener T03. In this way, the RF tag 10 can be disposed in a position where the distortion is less likely to be concentrated due to the placement of the stiffener T03. Therefore, the load applied to the RF tag 10 is reduced, which in turn improves the durability of the RF tag 10. For example, the RF tag 10 may be disposed by being sandwiched between the stiffener T03 and the side rubber T08.

Alternatively, the RF tag 10 may be disposed by being sandwiched between the stiffener T03 and the carcass T05. The part of the carcass T05, that sandwiches the RF tag 10 in place together with the stiffener T03, may be located on the outer side in the tire width direction with respect to the stiffener T03, or it may be located on the inner side in the tire width direction with respect to the stiffener T03. When the part of the carcass T05, that sandwiches the RF tag 10 in place together with the stiffener T03, is located on the outer side in the tire width direction with respect to the stiffener T03, the load applied to the RF tag 10 caused by impact or damage to the tire TO1 from the outside side of the tire TO1 in the tire width direction can be reduced even more. This makes it possible to further improve the durability of the RF tag 10.

The stiffener T03 may also comprise a part that is arranged adjacent to a rubber chaffer T11. In such cases, the RF tag 10 may be disposed by being sandwiched between the stiffener T03 and the rubber chaffer T11.

The stiffener T03 may comprise a part that is adjacent to a hat rubber on the outer side in the tire width direction. In this case, the RF tag 10 may be disposed by being sandwiched between the stiffener T03 and the hat rubber.

The stiffener T03 may be composed of a plurality of rubber components of different hardness. In such a case, the RF tag 10 may be disposed by being sandwiched between the plurality of rubber components that make up the stiffener T03.

The RF tag 10 may be disposed by being sandwiched between the hat rubber and the component adjacent to the hat rubber. For example, the RF tag 10 may be disposed by being sandwiched between the hat rubber and the carcass ply T05p. In this way, the impact on the RF tag 10 can be mitigated by the hat rubber, and this improves the durability of the RF tag 10.

This configuration is particularly suitable when the tire TO1 is a heavy-duty pneumatic tire (e.g., pneumatic tires for trucks and buses, pneumatic tires for off-the-road (construction vehicle) use, etc.).

The RF tag 10 may be disposed, for example, between the rubber chaffer T11 and the side rubber T08 (Refer to point P82 in Figure 3.). In this way, the RF tag 10 can be disposed in a position where the distortion is less likely to be concentrated due to the disposition of the rubber chaffer T11. This reduces the load applied to the RF tag 10, and improves the durability of the RF tag 10.

The RF tag 10 may be disposed, for example, by being sandwiched between the rubber chafer T11 and the carcass T05 (Refer to point P81 in Figure 3.). In this way, the load applied to the RF tag 10 due to impact or damage from the rim can be reduced. This improves the durability of the RF tag 10.

The RF tag 10 may be disposed by being sandwiched between a nylon chafer and another component that is adjacent to the outer side or inner side of the nylon chafer in the tire width direction. In this way, the position of the RF tag 10 is less likely to change when the tire deforms. This reduces the load applied to the RF tag 10 when the tire deforms, and this improves the durability of the RF tag 10.

For example, the nylon chafer may comprise a part that is adjacent to the rubber chafer T11 on the outer side in the tire width direction. In such a case, the RF tag 10 may be disposed by being sandwiched between the nylon chafer and the rubber chafer T11. For example, the nylon chafer may comprise a part that is adjacent to the side rubber T08 on the outer side in the tire width direction. In such a case, the RF tag 10 may be disposed by being sandwiched between the nylon chafer and the side rubber T08.

For example, the nylon chafer may have a part adjacent to the stiffener T03 on the inner side in the tire width direction. In such a case, the RF tag 10 may be disposed by being sandwiched between the nylon chafer and the stiffener T03. In addition, the nylon chafer may comprise a part that is adjacent to a hat rubber T12 on the inner side in the tire width direction, for example. In such cases, the RF tag 10 may be disposed by being sandwiched between the nylon chafer and the hat rubber T12. Furthermore, the nylon chafer may comprise a part that is adjacent to the carcass T05 on the inner side in the tire width direction. In such cases, the RF tag 10 may be disposed by being sandwiched between the nylon chafer and the carcass T05. Furthermore, the nylon chafer may comprise a part that is adjacent to a wire chafer T14 on the inner side in the tire width direction. In such cases, the RF tag 10 may be disposed by being sandwiched between the nylon chafer and the wire chafer T14.

In this way, the RF tag 10 may be disposed by being sandwiched between the nylon chafer and another component that is adjacent to this nylon chafer on the outer side or inner side in the tire width direction. In particular, when the outer side of the RF tag 10 in the tire width direction is covered with a nylon chafer, the load applied to the RF tag 10 due to impact or damage from the outside of the tire in the tire width direction can be reduced even more. This makes it possible to further improve the durability of the RF tag 10.

This configuration is particularly suitable when the tire TO1 is a heavy-duty pneumatic tire (e.g., pneumatic tires for trucks and buses, pneumatic tires for off-the-road (construction vehicle) use, etc.).

The RF tag 10 may be disposed by being sandwiched between the wire chafer T14 and another component that is adjacent to this wire chafer T14 on the inner side or outer side in the tire width direction. In this way, the position of the RF tag 10 is less likely to change when the tire deforms. This reduces the load applied to the RF tag 10 when the tire deforms. This improves the durability of the RF tag 10. The another component that is adjacent to the wire chaffer T14 on the inner side or outer side in the tire width direction may be a rubber member, such as a rubber chaffer T14 (Refer to point P102 in Figure 3.). This another component that is adjacent to the wire chaffer T14 on the inner side or outer side in the tire width direction may be a carcass T05 (Refer to point P101 in Figure 3.).

A belt reinforcement layer T04 may be provided on the outer side of the belt T06 in the tire radial direction. For example, the belt reinforcement layer T04 may be formed of a cord made of polyethylene terephthalate that is spirally wound continuously in the tire circumferential direction. The code of the belt reinforcement layer T04 is made by applying adhesive treatment under a tension of 6.9×10⁻² N/tex or more, and the elastic modulus at a load of 29.4 N measured at 160°C may be 2.5 mN/dtex% or more. Furthermore, the belt reinforcement layer T04 may be disposed to cover the entire belt T06, or it may be disposed to cover only the two ends of the belt T06. Moreover, the winding density per unit width of the belt reinforcement layer T04 may vary depending on the position in the width direction. In this way, it is possible to reduce road noise and flat spots without reducing high-speed durability.

This configuration is particularly suitable when the tire T01 is a passenger vehicle pneumatic tire.

### EXAMPLES

Tires T01 according to an Example and a Comparative Example were prepared and evaluated, and will be described below.

The shape of the footprint FP of the tire in Example 1 was as illustrated in Figure 1.

The shape of the footprint FP of the tire in Comparative Example 1 was as illustrated in Figure 5.

Each example tire had three main grooves 3 and four (rib) land portions 5 and 6 on the tread surface 8.

Each example tire had the same tire size.

The details of each example tire are as provided in Table 1.

The hydroplaning performance of each example tire was evaluated. In evaluating the hydroplaning performance, cornering hydroplaning was evaluated. Specifically, in each of the tire evaluations, four tires of the example were mounted on a vehicle, which was then driven at a constant speed while cornering on a wet road surface, and the maximum lateral G force (turning force) acting on the vehicle at that time was measured. Next, the speed was increased slightly and the maximum lateral G force was measured in the same way, and this was then repeated while increasing the speed. When hydroplaning occurs, the vehicle skids sideways and the maximum lateral G force decreases. Finally, the maximum lateral G force for each speed was added together (integrated) and evaluated using an index. The results are provided in Table 1. In Table 1, the hydroplaning performance of Example 1 is expressed as an index value when the hydroplaning performance of Comparison Example 1 is set to 100. The index value for hydroplaning performance provided in Table 1 indicates that the higher the value, the higher the hydroplaning performance.

**[Table 1]**

| | Comparative Example 1 | Example 1 |
|---|---|---|
| Gauge L of tread rubber T07 (mm) | 7.5 | 7.5 |
| Groove depth of each main groove 3 (mm) | 5.5 | 5.5 |
| Shape of Footprint FP | Figure 5 | Figure 1 |
| Hydroplaning performance (-) | 100 | 110 |

As can be seen from Table 1, the tire in Example 1 had the same gauge L of tread rubber T07 and the same groove depth of each main groove 3 as the tire in Comparative Example 1, however, it was able to improve the hydroplaning performance.

### INDUSTRIAL APPLICABILITY

The tire according to the present disclosure can be used for any type of four-wheeled vehicle tire, and is particularly suitable for use in passenger vehicle tires. In addition, the tire of the present disclosure can be used for pneumatic tires.

### REFERENCE SIGNS LIST

- TO1: Tire
- 3: Main groove (groove)
- 31: Shoulder main groove
- 32: Center main groove
- 5: Shoulder land portion (land portion)
- 5e1: Outer periphery on the first side in the tire circumferential direction
- 5t1: End on the first side in the tire circumferential direction
- 5e2: Outer periphery on the second side in the tire circumferential direction
- 5t2: End on the second side in the tire circumferential direction
- 6: Center land portion (land portion)
- 6e1: Outer periphery on the first side in the tire circumferential direction
- 6t1: End on the first side in the tire circumferential direction
- 6e2: Outer periphery on the second side in the tire circumferential direction
- 6t2: End on the second side in the tire circumferential direction
- 71: Lug groove (groove)
- 72: Sipe
- 8: Tread surface
- E: Ground contact edge
- FP: Footprint
- FPe1: Outer periphery on the first side in the tire circumferential direction
- FPe2: Outer periphery on the second side in the tire circumferential direction
- CS: Contact surface
- CD: Tire circumferential direction
- CD1: First side in the tire circumferential direction
- CD2: Second side in the tire circumferential direction
- HPR: Hydroplaning region
- T01t: Tread portion
- T01w: Sidewall portion
- T01b: Bead portion
- T02: Bead core
- T03: Bead filler
- T04: Belt reinforcement layer
- T05: Carcass
- T05p: Carcass ply
- T06: Belt
- T06p: Belt ply
- T07: Tread rubber
- T08: Side rubber
- T09: Inner liner
- T11: Rubber chaffer
- T14: Wire chaffer
- CL: Tire equatorial plane
- 10: RF tag

## Claims

1. A tire, wherein
a tread surface is provided with:
a plurality of main grooves each extending in a tire circumferential direction;
a pair of shoulder land portions, which are defined between a pair of main grooves that are located on an outermost side in a tire width direction among the plurality of main grooves and a pair of ground contact edges; and
one or more center land portions, which are defined between the plurality of main grooves, wherein
in a footprint measured under a reference measurement condition, an end on a first side in the tire circumferential direction of each of the center land portion is located on the first side in the tire circumferential direction relative to an end on the first side in the tire circumferential direction of each of the shoulder land portion.

2. The tire as described in claim 1, wherein an outer periphery on the first side in the tire circumferential direction of the footprint extends, in a part spanning the one or more center land portions, toward the first side in the tire circumferential direction as it moves toward an inner side in the tire width direction.

3. The tire as described in claim 1, wherein an outer periphery on the first side in the tire circumferential direction of the footprint extends, throughout its entire length, toward the first side in the tire circumferential direction as it moves toward an inner side in the tire width direction.

4. The tire as described in claim 1, wherein an outer periphery on the first side in the tire circumferential direction of the footprint at each of the shoulder land portion extends toward the first side in the tire circumferential direction as it moves toward an inner side in the tire width direction, and has a curved shape that is convexly curved toward the first side in the tire circumferential direction.

5. The tire as described in claim 1, wherein a gauge of tread rubber is 7.8 mm or less, and
a depth of each of the main grooves is 5.8 mm or less.
